# EUROPEAN PATENT SPECIFICATION

(11) **EP 1 459 696 B1**
(45) Date of publication and mention of the grant of the patent: **21.06.2006**
(21) Application number: 03006063.6
(22) Date of filing: 19.03.2003
(51) Int. Cl.: A61C 1/18, A61C 1/12, A61C 17/00

(54) **Contra-angle handpiece for dental prophylaxis**
Winkelhandstück für zahnärtzlische Prophylaxe
Pièce à main à contre-angle pour prophylaxie dentaire

(43) Date of publication of application: 22.09.2004
(73) Proprietor: R.O.E.N. S.a.s. di Boarolo Marco & C., 10045 Torino (IT)
(72) Inventor: Boarolo, Paolo, 10145 Torino (IT)
(74) Representative: Buzzi, Franco

(56) References cited:
- FR-A- 1 194 501
- FR-A- 2 793 134
- US-A- 3 629 944
- US-A- 4 268 252
- US-A- 4 278 428
- US-B1- 6 168 433

## Description

The present invention relates in general to dental prophylaxis, with particular reference to the cleaning and polishing of teeth.

More specifically, the invention relates to a handpiece usable for said prophylaxis, comprising a hollow body having a first section within which is able to rotate a drive shaft able to be actuated in rotation by means of an electric motor for dentists, and a second section suited for the insertion thereon of a single-use angled head having an actuation shaft which can be coupled in rotation with said drive shaft.

Document US 4 278 428 discloses a hand piece according to the preamble of claim 1.

The aim of the present invention is to provide such a handpiece having an arrangement that is not only able to improve its functional effectiveness, but also has particularly simple and strong construction, with particular reference to the coupling of the angled single-use head.

According to the invention as set forth in claim 1, this aim is essentially achieved thanks to the fact that:
- said first and said second section of the handpiece form an angle between them,
- said second section incorporates, at said first section, a toothed member able to revolve freely and meshed with a complementary toothed member borne by said drive shaft,
- said toothed member is arranged to be coupled, by axial friction coupling, with said shaft for actuating the single-use angled head.

The toothed member is able to revolve with axial play within a support bushing inserted in said section, and has an axial cavity for the extractable forced engagement of said shaft for actuating the single-use angled head.

Further features and advantages of the invention shall become more readily apparent from the detailed description that follows with reference to the accompanying drawings, illustrated purely by way of non limiting example, in which:
- Figure 1 is a schematic perspective view of a handpiece for dental prophylaxis according to the invention,
- Figure 2 is a partial longitudinal view, in enlarged scale, of Figure 1,
- Figure 3 is a cross section view in enlarged scale according to the line III-III of Figure 2,
- Figure 4 is a longitudinal section view in enlarged scale of a detail of one alternative embodiment of the handpiece,
- Figure 5 is an exploded view of Figure 4, and
- Figure 6 is a front elevational view in enlarged scale of the detail indicated by arrow VI in Figure 5.

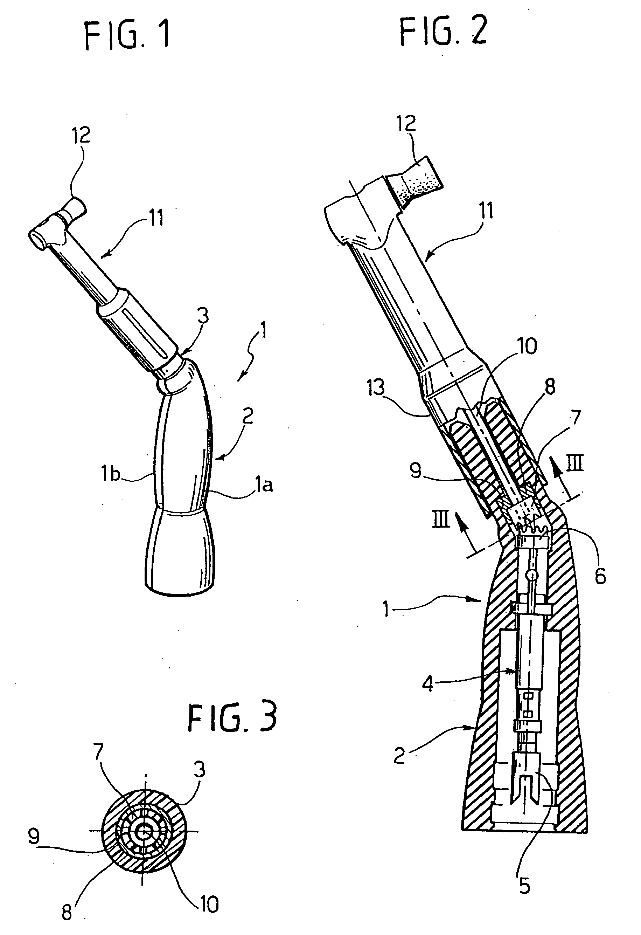

In Figures 1-3 of the drawings, the reference number 1 globally indicates a handpiece for dental prophylaxis according to the invention.

The handpiece 1 may be formed either by two half-shells 1a, 1b made of moulded plastic material or, more conveniently, by a hollow body made of aluminium forming a first section 2 and a second section 3 positioned at an angle with respect to each other, said angle being advantageously in the order of 20°-30°. Thus, in practice, the handpiece 1 has a general contra-angle configuration: the first section 2 is shaped anatomically and constitutes the grip of the handpiece, whilst the second section 3 has a general cylindrical configuration with constant cross section.

Inside the first section 2 is coaxially mounted, in rotary fashion, a drive shaft generically indicated as 4, having an outer end 5 arranged for its coupling - in known fashion - with the output shaft of an electric motor for dentists whereto the handpiece 1 is applied in use. The inner end of the drive shaft 4 bears a gear wheel 6 facing the second section 3 and whose teeth are directly meshed with a gear wheel 7 supported in rotary fashion, in the manners clarified below, in correspondence with the end of the second section 3 which is joined to the first section 2. Each gear wheel 6, 7 is coaxial to the respective section 2, 3 so that the related teeth mutually converge and mesh in correspondence with a side.

For mounting the gear wheel 7 inside the second section 3 a support bushing 8 is provided, positioned within a corresponding seat 9 of the section 3 and in whose cavity the gear wheel 7 is inserted free to rotate and with a slight axial play. Mounted in this manner, the gear wheel 7 is, in practice, floats axially and angularly within the bushing 8, and its axial extraction relative thereto is prevented by engagement with the gear wheel 6.

The gear wheel 7 is annular, and is adapted for its coupling with the actuation shaft 10 of an angled single-use head 11 provided with a soft rotating cup tool 12 for the cleaning and polishing of teeth. The angled head 11, conventionally called "prophy angle", is generally known in itself, and therefore will not be described in detail. It may be, for instance, of the type described and illustrated in US Patent US-A-5,964,590 in the name of Young Dental Manufacturing Company. For the purposes of the present invention, it is sufficient to clarify that the angled head 11 comprises a cylindrical tubular body 13 arranged to be axially coupled with rapid insertion and extraction onto the section 3 of the handpiece 1, and to be angularly locked relative thereto in the manner shown in Figures 1 and 2. The actuation shaft 10, which actuates at an end the cup tool 12, projects at the other end from the tubular body 13 to be able to be actuated in rotation, in the coupled condition between the angled head 11 and the handpiece 1, by the drive shaft 4. According to the fundamental characteristic of the invention, this is achieved thanks to the fact that, as a result of the engagement of the body 13 of the angled head 11 on the section 3 of the handpiece 1, the end of the drive shaft 10 traverses the support bushing 8 and is coupled, by means of axial friction coupling, inside the cavity of the gear wheel 7. With this arrangement, motion is transmitted between the shaft 5 and the shaft 10 in constructively simple and hence economical fashion.

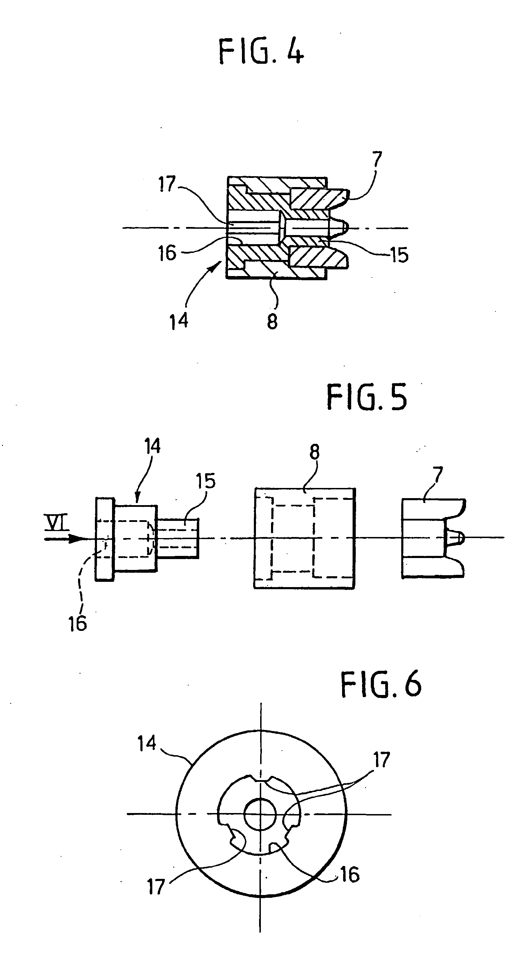

Figures 4-6 show a variant of the gear wheel 7 - support bushing 8 assembly. According to this variant an entraining sleeve 14 is rotatably housed within the support bushing 8, having a spigot 15 onto which the gear wheel 7, which is also rotatable within the bushing 8, is frictionally coupled in rotation.

The entraining sleeve 14 is preferably made of metal and its cavity is formed, on the side opposite to the spigot 15, with a series (three in the shown example) of radial projections 17 extending axially and into which the protruding end of the actuation shaft 10 is forcibly fitted so as to be frictionally coupled in rotation with the gear wheel 7. The radial projections 17 are conveniently made by broaching.

Naturally, construction details and embodiments ma be widely varied from what is described and illustrated herein, without thereby departing from the scope of the present invention as defined in the claims that follow.

## Claims

1. Handpiece for dental prophylaxis, comprising a hollow body (1) having a drive shaft (4) and a first section (2) within which said drive shaft (4) is rotatable and able to be actuated in rotation by means of an electric motor for dentists, a second section (3), and an angled head (11) having an actuation shaft (10) which can be coupled in rotation with said drive shaft (4), said angled head (11) having a tubular body (13) arranged to be axially coupled on said second section (3) wherein said first and said second section (2, 3) of the handpiece (1) form an angle between them and said second section (3) incorporates, at said first section (2), a freely revolving toothed member (7) meshed with a complementary toothed member (6) borne by said drive shaft (4),
**characterised in that**:
- said angled head is a single-use head (11)
- said toothed member (7) is able to revolve with axial play within a support bushing (8) inserted in said second section (3) and is arranged to be coupled, by axial friction coupling, with said actuating shaft (10) of said single-use angled head (11) as a result of the axial engagement of said tubular body (13) of the single-use angled head (11) on said second section (3) of the handpiece (1).

2. Handpiece as claimed in claim 1, **characterised in that** said toothed member (7) has an axial cavity for the forced engagement of said actuating shaft (10) of the single-use angled head (11).

3. Handpiece as claimed in claim 1, **characterised in that** said toothed member (7) is rotatably housed in a support bushing (8) provided within said second section (3) and in which an entraining sleeve (14) is also rotatably fitted, said entraining sleeve (14) having a spigot (15) onto which said toothed member (7) is coupled in rotation and being formed, on the side opposite to said spigot (15), with radial projections (17) with which said actuating shaft (10) is frictionally coupled.

4. Handpiece as claimed in any of the previous claims, **characterised in that** said first and second sections (2, 3) form an angle in the order of 20°-30° between them.

## Patentansprüche

1. Handstück zur Zahnprophylaxe, aufweisend einen hohlen Körper (1), der eine erste Antriebswelle (4) und einen ersten Abschnitt (2) hat, in dem die Antriebswelle (4) drehbar ist und in der Lage ist, mittels eines elektrischen Motors für Zahnärzte in Drehung versetzt zu werden, einen zweiten Abschnitt (3) und einen angewinkelten Kopf (11), der eine Betätigungswelle (10) hat, welche in Drehung mit der Antriebswelle (4) gekoppelt werden kann, wobei der angewinkelte Kopf (11) der einen röhrenförmigen Körper (13) aufweist, welcher so angeordnet ist, dass er axial auf dem zweiten Abschnitt (3) zu koppeln ist, wobei der erste und der zweite Abschnitt (2, 3) des Handstücks (1) einen Winkel zwischen sich bilden und der zweite Abschnitt (3) am ersten Abschnitt (2) ein frei drehbares, gezahntes Bauteil (7) beinhaltet, das sich mit einem komplementär verzahnten Bauteil (6) verzahnt, welches von der Antriebswelle (4) getragen wird,
**dadurch gekennzeichnet, dass**:
- der angewinkelte Kopf ein Kopf (11) zur einmaligen Verwendung ist,
- das gezahnte Bauteil (7) in der Lage ist, sich mit axialem Spiel in einer Stützbuchse (8) zu drehen, die in den zweiten Abschnitt (3) eingefügt ist und in der Lage ist, durch axiale Reibungslcopplung mit der Betätigungswelle (10) des einmalig zu verwendenden, angewinkelten Kopfs (11) gekoppelt zu werden als Ergebnis der axialen Erfassung des röhrenförmigen Körpers (13) des einmalig zu verwendenden, angewinkelten Kopfs (11) auf dem zweiten Abschnitt (3) des Handstücks (1).

2. Handstück wie beansprucht in Anspruch 1, **dadurch gekennzeichnet, dass** das gezahnte Bauteil (7) einen axialen Hohlraum für die erzwungene Erfassung der Betätigungswelle (10) des einmalig zu verwendenden, angewinkelten Kopfs (11) aufweist.

3. Handstück wie beansprucht in Anspruch 1, **dadurch gekennzeichnet, dass** das gezahnte Bauteil (7) drehbar in einer Stützbuchse (8) aufgenommen wird, welche im zweiten Abschnitt (3) bereitgestellt ist und in welcher ebenso eine Mitnebmermanschette (14) drehbar eingepasst ist, wobei die Mitnehmermanschette (14) einen Zapfen (15) hat, auf welchen das gezahnte Bauteil (7) in Drehung gekoppelt ist und wobei auf der gegenüberliegenden Seite zu dem Zapfen (15) sie mit radialen Vorsprüngen (17) gebildet wird, mit welchen die Betätigungswelle (10) reibungsgekoppelt wird.

4. Handstück wie beansprucht in irgendeinem der vorangehenden Ansprüche, **dadurch gekennzeichnet, dass** die ersten und zweiten Abschnitte (2, 3) einen Winkel in der Größenordnung von 20°-30° zwischen sich bilden.

## Revendications

1. Pièce à main pour prophylaxie dentaire, comprenant un corps creux (1) présentant une tige d'entraînement (4) et une première section (2) à l'intérieur de laquelle ladite tige d'entraînement (4) peut être amenée en rotation et peut être actionnée en rotation au moyen d'un moteur électrique pour dentistes, une seconde section (3), et une tête angulée (11) présentant une tige d'actionnement (10) qui peut être couplée en rotation à ladite tige d'entraînement (4), ladite tête angulée (11) présentant un corps tubulaire (13) agencé pour être couplé dans le sens axial sur ladite seconde section (3), dans laquelle ladite première et ladite seconde sections (2, 3) de la pièce à main (1) forment un angle entre elles et ladite seconde section (3) incorpore, au niveau de ladite première section (2), un élément denté (7) à rotation libre engrené avec un élément denté complémentaire (6) porté par ladite tige d'entraînement (4),
**caractérisée en ce que** :
- ladite tête angulée est une tête à usage unique (11),
- ledit élément denté (7) est capable d'être amené en rotation avec un jeu axial à l'intérieur d'une douille de support (8) insérée dans ladite seconde section (3) et est agencé pour être couplé, par couplage à friction axiale, avec ladite tige d'actionnement (10) de ladite tête angulée à usage unique (11) par suite de la mise en prise axiale dudit corps tubulaire (13) de la tête angulée à usage unique (11) sur ladite seconde section (3) de la pièce à main (1).

2. Pièce à main selon la revendication 1, **caractérisée en ce que** ledit élément denté (7) présente une cavité axiale pour la mise en prise forcée de ladite tige d'actionnement (10) de la tête angulée à usage unique (11).

3. Pièce à main selon la revendication 1, **caractérisée en ce que** ledit élément denté (7) est logé de façon rotative dans une douille de support (8) prévue à l'intérieur de ladite seconde section (3) et dans laquelle un manchon d'entraînement (14) est également monté de façon rotative, ledit manchon d'entraînement (14) présentant une queue de fixation (15) sur laquelle ledit élément denté (7) est couplé en rotation et étant formé, sur la face opposée à ladite queue de fixation (15), avec des saillies radiales (17) avec lesquelles ladite tige d'actionnement (10) est couplée par friction.

4. Pièce à main selon l'une quelconque des revendications précédentes, **caractérisée en ce que** lesdites première et seconde sections (2, 3) forment entre elles un angle de l'ordre de 20° à 30°.
